(19) **Europäisches Patentamt**

**European Patent Office**

**Office européen des brevets**

(11) Veröffentlichungsnummer: **0 174 482**
**B1**

(12) **EUROPÄISCHE PATENTSCHRIFT**

(45) Veröffentlichungstag der Patentschrift:
26.07.89

(21) Anmeldenummer: 85109603.2

(22) Anmeldetag: 31.07.85

(51) Int. Cl.⁴: **F 16 K 11/07**

(54) Zweistellungs-Schaltventil mit hydraulischer Selbsthaltung.

(30) Priorität: **12.09.84 DE 3433535**

(43) Veröffentlichungstag der Anmeldung:
**19.03.86 Patentblatt 86/12**

(45) Bekanntmachung des Hinweises auf die Patenterteilung:
**26.07.89 Patentblatt 89/30**

(84) Benannte Vertragsstaaten:
**AT BE CH DE FR GB IT LI LU NL SE**

(56) Entgegenhaltungen:
**DE-A- 1 498 280**
**DE-B- 1 149 214**
**DE-B- 1 254 925**
**DE-B- 1 262 708**
**DE-C- 1 055 909**
**FR-A- 990 435**
**US-A- 2 316 445**
**US-A- 2 507 384**
**US-A- 2 672 886**
**US-A- 2 680 447**

(73) Patentinhaber: **HEILMEIER & WEINLEIN Fabrik für Oel-Hydraulik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Kinkeldey, Stockmair & Partner, Maximilianstrasse 58, D-8000 München 22 (DE)**

ACTORUM AG

## Beschreibung

Die Erfindung betrifft ein Zweistellungs-Schaltventil der im Gattungsbegriff des Patentanspruchs 1 angegebenen Art.

In seit mehr als 20 Jahren bekannten Personenkraftwagen ist ein Hydrauliksystem für die hydropneumatische Fahrzeugfederung und andere Verbraucher vorgesehen. Das Hydrauliksystem wird von einer Pumpe bis auf einen maximalen Systemdruck aufgeladen, wenn der Systemdruck auf einen minimalen Systemdruck abfällt. Im Strömungsweg zwischen der Pumpe und einem Reservoir ist ein Zweistellungs-Abschaltventil eingeordnet, das vom Systemdruck gegen Federkraft gesteuert wird.

Im Schaltventil ist das Schliesselement eine durch die Feder auf einen zwischen dem Druckanschluss und dem Druckauslass angeordneten Ventilsitz gepresste Kugel. Der Steuerkolben wird vom Systemdruck beaufschlagt. Zwischen der Pumpe und dem System ist ein Rückschlagventil vorgesehen. Solange der maximale Systemdruck nicht erreicht wird, ist das Rückschlagventil offen und wird das Schliesselement auf den Ventilsitz gepresst. Die Pumpe versorgt das System und ist vom Reservoir abgetrennt. Sobald der maximale Systemdruck erreicht wird, verschiebt dieser den Steuerkolben, bis dieser mittels eines Stössels das Schliesselement vom Ventilsitz abhebt, so dass die Pumpe in das Reservoir fördert und das Rückschlagventil in Strömungsrichtung zur Pumpe sperrt. Das Zweistellungs-Schaltventil ist, da es ein Sitzventil ist, verhältnismässig teuer in der Herstellung. Ferner kann ein Schleichzustand nicht zuverlässig vermieden werden, bei dem ein Teil des von der Pumpe kommenden und für das System bestimmten Druckmittels ungenutzt abströmt, wodurch die Pumpe überlastet wird und sich das Druckmittel erwärmt. Das Schliesselement vermag nämlich relativ zum Steuerkolben Eigenbewegungen auszuführen und hebt dabei gelegentlich vom Ventilsitz ab, so dass kurzzeitig der Systemdruckbeaufschlagung des Steuerkolbens entgegengesetzte Druckimpulse an diesen auftreten, die zu einem instabilen Ventilverhalten führen. Die Gefahr dieses Schleichzustandes ist dann akut, wenn der Systemdruck sich ausserordentlich langsam dem minimalen oder dem maximalen Druckwert nähert.

Aus der Zeitschrift «Hydraulics and Pneumatics», April 1961, Seiten 69, 74 und 75, Fig. 18, ist ein Schaltventil dieser Art bekannt, bei dem zwischen Schliesskolben und Kolbenteil eine Ringnut vorgesehen ist, die in der Durchgangsstellung des Schliesskolbens den Strömungsweg vom Einlass zum Druckauslass freigibt. Der Schliesskolben und der Kolbenteil sind an den Endseiten druckentlastet. Vom Druckeinlass zweigt eine kleinquerschnittige Steuerleitung in eine getrennte Steuerkammer ab, in der der gegenüber dem Schliesskolben grössere Steuerkolben sitzt. Die Kolbenstange verbindet ihn mit dem Schliesskolben. Der Steuerkolben wird entgegen der in der druckentlasteten Kammer wirkenden Feder vom variablen Systemdruck beaufschlagt und auf der gegenüberliegenden, durch die Kolbenstange verkleinerten Seite durch den vom Druckeinlass abgeleiteten Druck. Bei diesem Schaltventil ist es nachteilig, dass die Steuerleitung vom Druckeinlass zur Steuerkammer eine Drosselwirkung hat, durch die eine schlagartige Bewegung des Steuerkolbens und damit des Schliesskolbens in die Durchgangsstellung gebremst wird, weil der Steuerkolben das Druckmittel durch die Steuerleitung und gegen den Druck im Druckeinlass verdrängen muss. Dies bedeutet, dass bei einer raschen Annäherung an den Maximaldruck die Strömungsverbindung vom Druckeinlass zum Druckauslass nicht ausreichend schnell freigegeben werden kann, wodurch der Systemdruck gegebenenfalls über den Maximaldruck ansteigt. Es ist deshalb erforderlich, die Beaufschlagungsflächen des Steuerkolbens und die Kraft der Feder so aufeinander einzustellen, dass gerade bei einer raschen Annäherung an die Maximaldruckgrenze des Systems diese nicht überschritten wird.

Dann lässt es sich nicht vermeiden, dass bei einer sehr langsamen Annäherung an den Maximaldruck die Drosselwirkung der Steuerleitung nicht so stark zum Tragen kommt, so dass der Schliesskolben den Strömungsweg vom Druckeinlass zum Druckauslass schon früher freigibt, so dass der Systemdruck unter dem eigentlich gewünschten Maximaldruck bleibt. Bei einer langsamen Annäherung an den Maximaldruck kann es ferner passieren, dass der Schliesskolben bereits einen Durchgangsspalt zum Druckauslass freigibt, ohne dass der Maximaldruck schon erreicht wäre, und dass sich dann ein Gleichgewichtszustand ergibt, bei dem bei einem noch unterhalb des Maximaldrucks liegenden Systemdruck sowohl über das Rückschlagventil in das System als auch über den offenen und sich nicht mehr vergrössernden Spalt Druckmittel aus dem Druckeinlass in den Druckauslass abströmt. Dem Zweistellungs-Schaltventil fehlt bei diesem ungünstigen Betriebszustand ein schlagartiger Umschaltimpuls. Das gleiche gilt bei einem sehr langsamen Abfall des Systemdrucks, weil sich dann ebenfalls ein Gleichgewichtszustand einstellen kann, bei dem der Schliesskolben nicht in seine Absperrstellung gelangt, sondern einen schmalen Spalt offen lässt, so dass gleichzeitig in das System und in den Druckauslass gefördert wird. Ein derart langsames Annähern an den Maximaldruck kann in einem Fahrzeughydrauliksystem eintreten, wenn ein Verbraucher eine konstant grosse Hydraulikmenge verbraucht. Ein sehr langsames Annähern an den Minimaldruck tritt hingegen auf, wenn in einem Fahrzeughydrauliksystem ein Verbraucher eine sehr geringe konstante Menge verbraucht. Der fehlende Bewegungsimpuls für den Schliesskolben resultiert in den beiden Betriebszuständen aus der Tatsache, dass die über die Steuerleitung in der Steuerkammer spürbaren Druckänderungen verzögert auftreten.

Ein verzögertes Ansprechen des Steuerkolbens ist aber nicht nur durch die Drosselwirkung der Steuerleitung bedingt, sondern auch durch den Umstand, dass die Steuerleitung in den Druckeinlassabschnitt vor der Gehäusebohrung einmündet, wo wegen der Drosselwirkung zwischen der Flanke der Ringnut und des Schliesskolbens und der Druckeinlassmündung bei voller Förderung der Pumpe ein beträchtlicher Gegendruck ansteht, bis der Schlieskolben erheblich weiter in seine Druchgangsstellung bewegt worden ist. Die Drosselwirkung und dieser Gegendruck verhindern die schlagartige Entlastung der einen Seite des Steuerkolbens und ermöglichen beim «Anschleichen» an den Maximaldruck ein Stillstehen des Schliesskolbens in einer Zwischenstellung, in der sowohl in das System als auch in das Reservoir gefördert wird.

Der Erfindung liegt die Aufgabe zugrunde, ein Zweistellungs-Schaltventil der eingangs genannten Art dahingehend zu verbessern, dass es bei verringertem baulichen Aufwand auch dann zuverlässig eine deutliche Umschaltbewegung des Schliesskolbens gewährleistet, wenn die Minimal- oder die Maximaldruckgrenze im zu versorgenden System sehr langsam erreicht werden.

Die gestellte Aufgabe wird erfindungsgemäss durch die im kennzeichnenden Teil des Patentanspruchs 1 angegebenen Merkmale gelöst.

Bei dieser Ausbildung wird mit grosser Zuverlässigkeit ein ruckartiger Schaltimpuls, zumindest bei Erreichen des Maximaldrucks, dadurch erzwungen, dass unabhängig davon, ob und wie weit der Druckeinlass schon mit dem Druckauslass verbunden ist, ausschliesslich abhängig von der sich aus der Höhe des Systemdrucks ergebenden Hubbewegung des Schliess- und Steuerkolbens ein Servo-Kraftimpuls erzeugt wird, der am Schliesskolben ruckartig eine Kraft erzeugt, so dass das Schaltventil schlagartig umschaltet.

Zunächst schiebt der ansteigende Systemdruck den Steuerkolben nach oben, bis der Kolbenteil die Ringkammer vom Druckeinlass trennt. In diesem Moment wird die Ringkammer schlagartig entlastet und der Steuerdruck schiebt den Schliesskolben in die Durchgangsstellung, bis die Pumpe in das Reservoir fördert. Die Servowirkung tritt unabhängig davon ein, wie langsam der Systemdruck angestiegen ist. Wichtig ist nur, dass er die obere Druckgrenze erreicht hat. Solange danach der Steuerdruck nicht bis auf die untere Druckgrenze sinkt, hält der Steuerdruck den Schliesskolben in der Durchgangsstellung (Selbsthaltung). Wird der Minimaldruck erreicht, schiebt die Feder den Schliesskolben nach unten, bis die Ringkammer verschlossen und gleich darauf die Strömungsverbindung vom Druckeinlass zur Ringkammer wieder freigegeben wird. Der Schliesskolben wirkt bereits mit dem Druckauslass drosselnd zusammen, ohne seine Absperrstellung erreicht zu haben. Daraus resultiert ein fühlbarer Druckanstieg im Ringraum, der schlagartig einen Kraftimpuls erzeugt, mit dem der Schliesskolben ruckartig in die Absperrstellung gebracht wird und in dieser gehalten bleibt (Selbsthaltung).

Eine weitere zweckmässige Ausführungsform geht aus Anspruch 2 hervor. Diese Strömungsverbindungen lassen sich baulich einfach im Stufenkolben verwirklichen, der ohnedies einer sorgfältigen Bearbeitung unterworfen wird. Das Gehäuse mit der Gehäusebohrung ist hingegen einfach und preiswert herstellbar.

Wichtig ist ferner die Massnahme von Anspruch 3, weil damit ein Schleichzustand und ein verzögertes oder unterbleibendes Schalten zuverlässig vermieden wird.

Das erfindungsgemässe Zweistellungs-Schaltventil lässt sich besonders zweckmässig für einen Anwendungszweck einsetzen, wie er aus Anspruch 4 hervorgeht. Dank der Funktionssicherheit und der garantiert schlagartigen Schaltbewegung des Schaltventils werden damit die Nachteile vermieden, die bisher in derartigen Hydrauliksystemen durch unter bestimmten Betriebsbedingungen mögliche Anschleichzustände in Kauf zu nehmen waren. Es wurden bisher (DE-AS 2 030 382) ein Hauptsicherheitsventil und ein Hilfssteuerschieber verwendet, um bei Erreichen einer Überlastgrenze die Leerlaufstellung einzusteuern. Bei dem Hilfssteuerschieber ergibt sich aber das Problem, dass bei sehr langsamer Annäherung an die Überlastgrenze ein Gleichgewichtszustand eintreten kann, bei dem ein nachdrücklicher Schaltimpuls fehlt, der zur korrekten Betätigung des Hauptsicherheitsventils beitragen könnte. Auch wirken sich unvermeidbare Druckschwankungen im Systemdruck so auf das bekannte System aus, dass die Lastgrenze in Abhängigkeit von solchen Druckschwankungen variiert.

Anhand der Zeichnungen werden nachstehend Ausführungsformen des Erfindungsgegenstandes erläutert. Es zeigen:

Fig. 1 ein Hydrauliksystem mit einem Zweistellungs-Schaltventil, und

Fig. 2 ein anderes Hydrauliksystem mit einer Überlastsicherung und dem nur symbolisch dargestellten Zweistellungs-Schaltventil gem. Fig. 1.

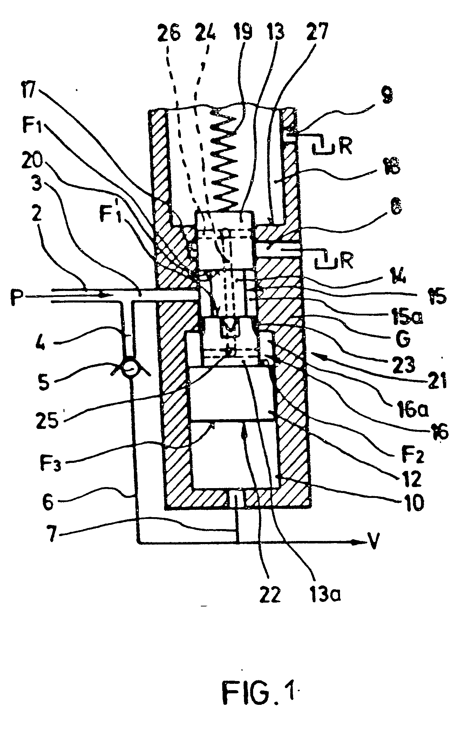

Aus Fig. 1 ist ein Hydrauliksystem erkennbar, in dem ein Verbraucherkreis V von einer Hydraulikpumpe P derart mit Druck versorgt wird, dass im Verbraucherkreis V stets ein zwischen einem Maximaldruck und einem Minimaldruck liegender Druck vorliegt, wobei der Minimaldruck noch so bemessen ist, dass er zur ordnungsgemässen Versorgung aller vorgesehenen Verbraucher ausreicht. Damit die Pumpe P nicht überbelastet wird, wenn der Maximaldruck im Verbraucherkreis V erreicht ist, ist ein Zweistellungs-Schaltventil 21 vorgesehen, das die Pumpe nach Erreichen des Maximaldrucks mit einem Reservoir R verbindet, so dass die Pumpe im wesentlichen gegendrucklos fördert.

Das Zweistellungs-Schaltventil 21 ist mit seinem Gehäuse G durch einen Druckeinlass 3 an eine von der Pumpe kommende Leitung 2 angeschlossen, von der gleichzeitig eine Zweigleitung 4 über ein Rückschlagventil 5 zu einer zum Verbraucherkreis V führenden Leitung 6 führt. Das Rückschlagventil 5 sperrt in Strömungsrichtung von der Leitung 6 zur Leitung 2 und öffnet in Gegenrichtung beim oder unterhalb des Minimaldrucks im Verbraucherkreis V.

Im Gehäuse G ist eine abgestufte Gehäusebohrung vorgesehen, die aus einem ersten Gehäusebohrungsabschnitt 10, 16 mit grossem Durchmesser, einem Gehäusebohrungsabschnitt 15 mit kleinerem Durchmesser und einer Kammer 18 besteht, die miteinander in Verbindung stehen. In der Gehäusebohrung ist ein Stufenkolben 22 verschiebbar angeordnet, der einen zweigeteilten Kolbenabschnitt mit kleinerem Durchmesser sowie einen Kolbenabschnitt mit grösserem Durchmesser aufweist, die über eine Kolbenstange 14 miteinander verbunden sind und einen Schliesskolben 13, einen davon abgesetzten Kolbenteil 13a sowie einen Steuerkolben 12 bilden. Der Kolbenteil 13a ist mit dem den Steuerkolben 12 bildenden Kolbenabschnitt direkt verbunden. Der Schliesskolben 13 ist in dem kleineren Gehäusebohrungsabschnitt 15 verschiebbar und ragt mit seinem Ende in die Kammer 18.

Ein Druckeinlass 3 ist an die Leitung 2 von der Pumpe P angeschlossen und mündet zwischen einem Druckauslass 8 zum Reservoir und dem grösseren Gehäusebohrungsabschnitt 16 in den kleineren Gehäusebohrungsabschnitt 15 seitlich ein. Im Bereich des Druckauslasses 8 ist in den kleineren Gehäusebohrungsabschnitt 15 eine umlaufende Ringnut 17 eingeformt, die mit einer am Schliesskolben 13 ausgebildeten Steuerkante 20 zusammenarbeitet. Die Kammer 18, in der eine den Schliesskolben 13 und damit den Stufenkolben 22 beaufschlagende Feder 19 angeordnet ist, ist entweder über eine Leitung 9 mit dem Reservoir verbunden und druckentlastet, oder direkt über eine nicht dargestellte Leitung an den Druckauslass 8 angeschlossen.

Es begrenzen das Schliesselement 13 und der Kolbenteil 13a einen Ringraum 15a im kleineren Gehäusebohrungsabschnitt 15, während der Steuerkolben 12 mit dem Kolbenteil 13a eine Ringkammer 16a im grösseren Gehäusebohrungsabschnitt 16 begrenzen, die durch den Kolbenteil 13a von dem Ringraum 15a getrennt ist. Der Ringfläche F1 des Schliesskolbens 13 liegt die gleichgrosse Ringfläche F1' am Kolbenteil 13a gegenüber, so dass hier der im Ringraum 15a herrschende Druck keine axiale Komponente erzeugt. Es sind am Teil 13a Strömungstaschen ausgeformt, die eine Strömungsverbindung 23 zwischen dem Ringraum 15a und der Ringkammer 16a herstellen, wenn der Stufenkolben 22 in der in Fig. 1 dargestellten Lage steht, in der der Schliesskolben 13 seine Absperrstellung einnimmt und den Druckeinlass 3 vom Druckauslass 8 absperrt. In dieser Stellung wirkt somit der in der Ringkammer 15a herrschende Druck der Pumpe P, mit dem diese den Verbraucherkreis V beaufschlagt, in der Ringkammer 16a auf der Ringfläche F2 und zwar entgegengesetzt zum gleichen Druck an der Fläche F3. Zusammen mit der Kraft der Feder 19 wird der Stufenkolben 22 in der dargestellten Stellung gehalten, bis der Maximaldruck im Verbraucherkreis V erreicht wird.

Im Stufenkolben 22 ist ferner eine weitere Strömungsverbindung 24 in Form eines Längsdurchgangs vorgesehen, der durch Einlässe 25 an die Ringkammer 16a ständig angeschlossen ist und über Auslässe 26 verfügt, die mit einer Steuerkante 27 der Kammer 18 derart zusammenarbeiten, dass die Ringkammer 16a bei einer nach oben gerichteten Bewegung des Stufenkolbens 22 in die Kammer 18 entlastet wird, sobald die Strömungstaschen durch die Innenwand des kleineren Gehäusebohrungsabschnittes 15 verschlossen sind und die Strömungsverbindung 23 zwischen dem Ringraum 15a und der Ringkammer 16a abgesperrt haben. In diesem Moment, d.h. sobald die Auslässe 26 die Steuerkante 27 überfahren, bricht der Druck in der Ringkammer 16a zusammen und wirkt an der Ringfläche F2 keine Kraft mehr. Der Druck an der Fläche F3 des Steuerkolbens 12 verschiebt den Stufenkolben 22 schlagartig nach oben, bis der Schliesskolben 13 seine Durchgangsstellung erreicht hat und den Druckeinlass 3 mit dem Druckauslass 8 verbindet. Das Rückschlagventil 5 sperrt; im Verbraucherkreis V ist der Maximaldruck erreicht; die Pumpe P fördert gegendrucklos in das Reservoir R. Eine ähnliche Servowirkung wird in umgekehrter Bewegungsrichtung des Stufenkolbens 22 ebenfalls erreicht, wenn der Druck im Verbraucherkreis V sich dem Minimaldruck nähert, weil die aus dem Druck auf der Fläche F3 wirksame Kraft soweit nachlässt, dass die Feder 19 den Stufenkolben 22 nach unten verschieben kann, bis zunächst die Auslässe 26 verschlossen und danch die Strömungstaschen soweit nach unten verschoben werden, bis der Ringraum 15a und damit in der Ringkammer 16a schlagartig ein Druck aufgebaut wird, der auf der Fläche F2 wirkt und den Stufenkolben 22 schlagartig nach unten verschiebt.

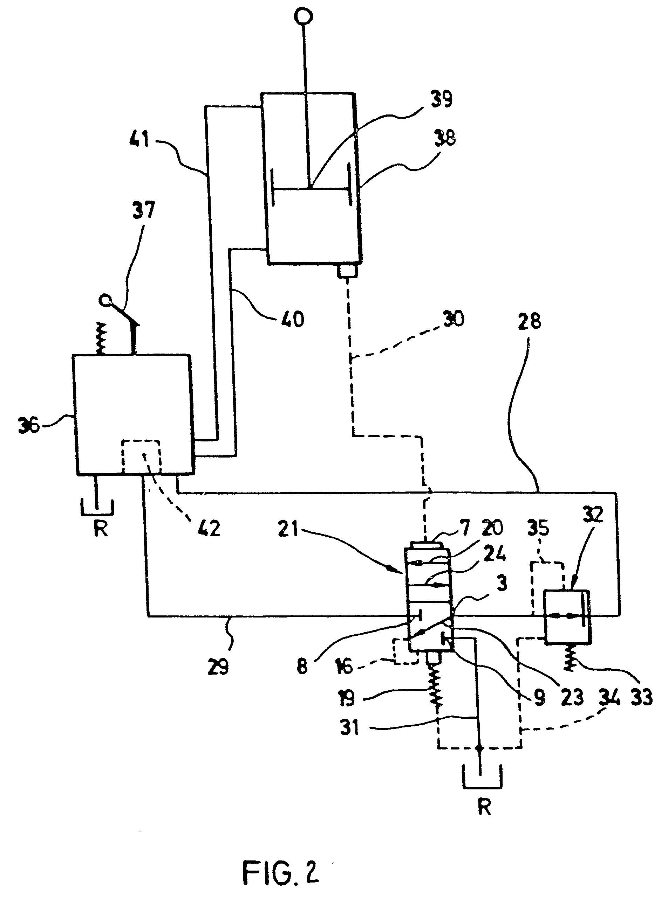

In Fig. 2 ist ein Hydrauliksystem angedeutet, das mit einer Überlastsicherung ausgestattet ist. Das Hydrauliksystem ist beispielsweise ein Kran-Hydrauliksystem, wobei mittels eines Steuerventils 36, z.B. eines Schiebersteuerventils, mittels eines Handhebels 37 die Bewegung eines Hebezylinders 38 steuerbar ist. Im Hebezylinder 38 ist ein Kolben 39 dadurch verschiebbar, dass entweder eine Hebeleitung 40 oder Senkleitung 41 mit Druck beaufschlagt wird. In das Steuerventil 36 ist eine Leerlaufeinrichtung 42 üblicher Bauart eingegliedert, die dann ein Abschalt- oder Leerlaufventil für das Steuerventil 36 schaltet, wenn eine Lastgrenze beim Hebezylinder 38 erreicht ist, die nicht überschritten werden darf. Vom Hebezylinder 38 ist eine Steuerdruckleitung 30 weggeführt, die einen der Belastung des Hebezylinders 38 proportionalen Steuerdruck enthält. Ferner ist vom Steuerventil 36 eine Steuerleitung 28 herausgeführt, die über einen weiteren Abschnitt 29 an die Leerlaufeinrichtung 42 angeschlossen ist und dazu dient, die Leerlaufeinrichtung 42 dann zu schalten, wenn die Lastgrenze erreicht ist. Die Steuerleitung 28 ist an die nicht dargestellte Druckversorgung des Hydrauliksystems angeschlossen und führt deshalb einen sich unter den vorliegenden Betriebsbedingungen verändernden Druck. Zwischen die Abschnitte 28 und 29 der Steuerleitung ist das Zweistellungs-Schaltventil 21 gemäss Fig. 1 eingesetzt, um dann die Abschnitte 28, 29 miteinander zu verbinden, wenn in der Steuerleitung 30 ein das Erreichen der Lastgrenze repräsentierendes Signal auftritt.

Das Zweistellungs-Schaltventil 21 gemäss Fig. 1 ist ein Fig. 2 in symbolhafter Darstellung gezeigt. Die Steuerleitung 30 führt über den Anschluss 7 zum Steuerkolben. An den Druckeinlass 3 ist der Abschnitt 28 der Steuerleitung angeschlossen, während vom Druckauslass 8 der Abschnitt 29 der Steuerleitung zur Leerlaufeinrichtung 42 führt. An den Auslass 9 ist eine Leerlaufeinrichtung 31 angeschlossen.

In der dargestellten Schaltstellung des Schaltventils 21 ist der in der Steuerleitung 30 vorliegende Druck noch so niedrig, dass angezeigt wird, dass das Hydrauliksystem noch unterhalb der Lastgrenze arbeitet. Das Schliesselement befindet sich in seiner Absperrstellung, so dass der Abschnitt 28 der Steuerleitung seinen Druck hält. Dieser Druck ist beispielsweise der Haltedruck für ein Leerlaufventil, das dann in die Leerlaufstellung geht und das Steuerventil 36 zumindest teilweise passiviert, wenn der Haltedruck wegfällt. Wie bei 16 angedeutet, wird der über die Strömungstaschen 23 vom Ringraum 15a in die Ringkammer 16a geleitete Druck aus dem Abschnitt 28 gehalten und dazu benutzt, den Stufenkolben 22 entgegen der Kraft der Feder 19 in dieser Stellung zu halten.

Im Abschnitt 28 der Steuerleitung ist ein Druckminderventil 32 bekannter Bauart eingesetzt, das durch eine Feder 33 auf eine bestimmte Druckhöhe eingestellt ist, die es unabhängig von Druckschwankungen im Abschnitt 28 der Steuerleitung für den Druckanschluss 3 des Schaltventils 21 hält. Dazu verfügt das Druckminderventil 32 über eine Hilfssteuerleitung 35 und eine Lecköleitung 34, die an die Entlastungsleitung 31 angeschlossen ist. Damit ist sichergestellt, dass am Druckeinlass 3 ständig ein konstanter Druck ansteht, und dass auch der in der Ringkammer 16a herrschende Druck keinen Schwankungen unterliegt. Das Schaltventil 21a arbeitet deshalb strikt in Abhängigkeit vom Druck in der Steuerleitung 30.

Sobald bei Erreichen der Lastgrenze das Signal in der Steuerleitung 30 einen Druckwert erreicht, der am Steuerkolben 12 (Fig. 1) den Druck auf der Fläche F2 und die Kraft der Feder 19 zu überwinden vermag, wird der Stufenkolben 22 in Fig. 1 nach oben verschoben, wobei über die Verbindung 24 der in der zwischenzeitlich vom Ringraum 15a abgetrennten Ringkammer 16a herrschende Druck über den Anschluss 9 und die Leitung 31 ins Reservoir abgebaut wird, so dass der Druck aus der Steuerleitung 30 am Steuerkolben 12 bzw. dessen Fläche F3 den Stufenkolben 22 schlagartig in die zweite Schaltstellung verschiebt. In dieser Schaltstellung stellt dann der Schliesskolben 13 mit seiner Steuerkante 20 eine Verbindung zwischen dem Druckeinlass 3 und dem Druckauslass 8 her, so dass der Haltedruck in dem Abschnitt 28 der Steuerleitung über den Abschnitt 29 zur Leerlaufeinrichtung 42 hin abgebaut wird und das Steuerventil 36 passiviert wird. Eine weitere Beaufschlagung der Hebeleitung 40 des Hebezylinders 38 ist dann nicht mehr möglich, bzw. es werden alle anderen an das Steuerventil 36 angeschlossenen, für das Erreichen der Lastgrenze verantwortlichen Verbraucher passiviert, bis eine andere Massnahme getroffen wird, die wieder zum Unterschreiten der Lastgrenze führt. Sobald beim Unterschreiten der Lastgrenze der Druck in der Steuerleitung 30 und damit am Steuerkolben 12 des Schaltventils 21 unter einen bestimmten Wert gefallen ist, schiebt die Feder 19 den Stufenkolben 22 wieder in der umgekehrten Richtung, bis schliesslich schlagartig die Verbindung zwischen dem Druckeinlass und dem Druckauslass unterbrochen und damit der zum Arbeiten des Steuerventils 36 notwendige Haltedruck in der Steuerleitung 28 wieder aufgebaut und gehalten wird.

## Patentansprüche

1. Zweistellungs-Schaltventil mit hydraulischer Selbsthaltung, mit einer Gehäusebohrung, die Teil eines Strömungsweges von einem Druckanschluss (3) zu einem radialen Druckauslass (8) ist, mit einem in der Gehäusebohrung in einem Abschnitt (15) mit kleinerem Durchmesser zwischen einer Absperrstellung und einer Durchgangsstellung hin- und herbewegbaren Schliesskolben (13), mit einem mit dem Schliesskolben (13) über eine einen Kolbenteil (13a) mit dem Durchmesser des Schliesskolbens tragende Kolbenstange (14) gekoppelten Steuerkolben (12) in einem Gehäusebohrungsabschnitt (16) mit grösserem Durchmesser, wobei der Schliesskolben (13) mit dem Kolbenteil (13a) im kleineren Gehäusebohrungsabschnitt (15) einen Ringraum (15a) begrenzt, und wobei der Steuerkolben (12) an seiner dem Schliesskolben (13) abgewandten Seite von einem zwischen einer Maximal- und einer Minimalgrenze variablen Steuerdruck und an der anderen kleineren Seite mit dem Druck im Druckanschluss (3) beaufschlagt ist, und mit einer den Schliesskolben (13) in Richtung zur Sperrstellung und dem Steuerdruck am Steuerkolben (12) entgegengesetzt beaufschlagenden, in einer druckentlasteten Kammer (18) an der dem Steuerkolben (12) abgewandten Seite des Schliesskolbens (13) angeordneten Feder (19), dadurch gekennzeichnet, dass der Druckanschluss (3) in den Ringraum (15) mündet, dass der Kolbenteil (13a) am Steuerkolben (12) angeordnet ist und im grösseren Gehäusebohrungsabschnitt (16) mit dem Steuerkolben (12) eine Ringkammer (16a) begrenzt, und dass zwischen dem Ringraum (15a) und der Ringkammer (16a) und zwischen der Ringkammer (16a) und der drucklosen Kammer (18) oder dem Druckauslass (8) jeweils ausschliesslich wechselseitig freigebbare un absperrbare Strömungsverbindungen (23; 24) vorgesehen sind, wobei die Strömungsverbindung (23) den Ringraum (15a) mit der Ringkammer (16a) verbindet, solange der Schliesskolben (13) in seiner Absperrstellung steht, während die Strömungsverbindung (24) die Ringkammer (16a) mit der Kammer (18) oder dem Druckauslass (8) verbindet, solange der Schliesskolben (13) in seiner Durchgangsstellung steht.

2. Zweistellungs-Schaltventil nach Anspruch 1, dadurch gekennzeichnet, dass die Strömungsverbindung (23) zwischen dem Ringraum (15a) und der Ringkammer (16a) durch taschenförmige Ausnehmungen (23) im Kolbenteil (13a) gebildet ist, die mit der Wand des kleineren Stufenbohrungsabschnittes (15) abdeckbar sind, und dass die Strömungsverbindung (24) zwischen der Ringkammer (16a) und der Kammer (18) einen über den Kolbenteil (13a) ständig an die Ringkammer (16a) angeschlossenen Längsdurchgang in der Kolbenstange (14) aufweist, der am Schliesskolben (13) einen Auslass (26) zur Kammer (18) oder zum Druckauslass (8) besitzt.

3. Zweistellungs-Schaltventil nach den Ansprüchen 1 und 2, dadurch gekennzeichnet, dass die Strömungsverbindung (23) zwischen dem Ringraum (15a) und der Ringkammer (16a) absperrbar ist, ehe die Strömungsverbindung (24) zwischen der Ringkammer (16a) und der Kammer (18) freigebbar ist.

4. Zweistellungs-Schaltventil nach wenigstens einem der Ansprüche 1 bis 3, gekennzeichnet durch seine Verwendung in einer hydraulischen Überlastsicherung eines Kran-Hydrauliksystems, in dem bei Erreichen des Maximaldrucks im System eine Leerlaufeinrichtung (42) betätigbar ist, wobei der Systemdruck den Steuerkolben beaufschlagt und zur Leerlaufeinrichtung (42) führende Steuerleitungen (28, 29) an den Druckeinlass (3) und den Druckauslass (8) angeschlossen sind, und wobei in den Steuerleitungen (28, 29) in Strömungsrichtung zum Schaltventil (21) diesem ein, vorzugsweise einstellbares, Druckminderventil (32) vorgeschaltet ist.

**Claims**

1. A two-position piloted valve with hydraulic locking, the valve being formed with a body bore which is part of flow path from a pressure inlet (3) to a radial pressure outlet (8), the valve comprising: a lid (13) reciprocable between a closed position and an open position in a reduced-diameter part (15) of the casing bore; a pilot piston (12) in a larger-diameter casing bore part (16), the pilot piston (12) being coupled with the lid (13) by way of a piston rod (14) carrying a piston element (13a) of the same diameter as the lid (13), the same co-operating with the piston element (13) to bound an annular chamber (15a) in the reduced-diameter casing bore part (15), the pilot piston (12) experiencing, on its side remote from the lid (13), a pilot pressure variable between a maximum limit and a minimum limit and experiencing on its other minor side the pressure in the pressure inlet (3); and aspring (19) which urges the lid (13) towards its closed position, acts on the pilot piston (12) in opposition to the pilot pressure and is disposed in a pressureless chamber (18) on that side of the lid (13) which is remote from the pilot piston (12), characterised in that the pressure inlet (3) extends to the annular chamber (15), the piston element (13a) is disposed on the pilot piston (12) and co-operates therewith to bound an annular chamber (16a) in the larger-diameter casing bore part (16), and flow connections (23; 24) adapted to be opened and closed exclusively in alternate relationship to one another are provided between the annular chamber (15a) and the annular chamber (16a) and between the annular chamber (16a) and the pressureless chamber (18) or the pressure outlet (8), the flow connection (23) connecting the annular chamber (15a) to the annular chamber (16a) for as long as the lid (13) is in its closed position whereas the flowconnection (24) connects the annular chamber (16a) to the pressureless chamber (18) or pressure outlet (8) for as long as the lid (13) is in its open position.

2. A valve according to claim 1, characterised in that the flow connection (23) between the annular chamber (15a) and the annular chamber (16a) is the form of pocket-like recesses (23) in the piston element (13a), such recesses being adapted to be covered by the wall of the reduced-diameter casing bore part (15), and the flow connection (24) between the annular chamber (16a) and the pressureless chamber (18) comprises a longitudinal passage in the piston rod (14), such passage being permanently connected by way of the piston element (13a) to the annular chamber (16a) and having on the lid (13) an outlet (26) to the pressureless chamber (18) or pressure outlet (8).

3. A valve according to claims 1 and 2, characterised in that the flow connection (23) between the annular chamber (15a) and the annular chamber (15a) and the annular chamber (16a) is adapted to be closed before the flow connection (24) between the annular chamber (16a) and the pressureless chamber (18) is adapted to be opened.

4. A valve according to at least one of claims 1-3, characterised by its use in a hydraulic overload protection of a crane hydraulic system in which a no-load device (42) is adapted to be activated upon the maximum pressure of the system being attained, the system pressure actuating the pilot piston and control lines (28, 29) which extend to the no-load device (42) being connected to the pressure inlet (3) and pressure outlet (8), a preferably adjustable pressure-reducing valve (32) being provided in the control lines (28, 29) before the valve (21) as considered in the flow direction theretowards.

## Revendications

1. Vanne-pilote à deux positions avec auto-entretien hydraulique, avec un alésge de cage faisant partie d'un trajet d'écoulement d'une prise de pression (3) vers une sortie de pression radiale (8), avec un piston de fermeture (13) pouvant être déplacé dans les deux sens, dans l'alésage de cage, dans une section (15) d'un diamètre plus faible, entre une position d'arrêt et une position de passage direct, avec un piston pilote (12) disposé dans une section d'alésage de cage (16) d'un diamètre plus grand et couplé avec le piston de fermeture (13) par l'intermédiaire d'une tige de piston (14) portant un élément de piston (13a) avec le diamètre du piston de fermeture, le piston de fermeture (13) délimitant avec l'élément de piston (13a), dans la section d'alésage de cage plus petite (15), un espace annulaire (15a) et le piston pilote (12) étant sollicité, sur sa face opposée au piston de fermeture (13) par une pression de commande variable entre une limite maximale et une limite minimale et, sur l'autre face plus petite, par la pression dans la prise de pression (3), et avec un ressort (19) déplaçant le piston de fermeture (13) en direction de la position d'arrêt et dans le sens opposé à la pression de commande agissant sur le piston pilote (12), qui est disposé dans une chambre (18) détendue sur la face du piston de fermeture (13) opposée au piston pilote (12), caractérisée en ce que la prise de pression (3) débouche dans un espace annulaire (15), que l'élément de piston pilote (13a) est disposé sur le piston pilote (12) et délimite dans la section d'alésage de cage plus grande (16), conjointement avec le piston pilote (12), une chambre annulaire (16a), et que, entre l'espace annulaire (15a) et la chambre annulaire (16a) ainsi qu'entre la chambre annulaire (16a) et la chambre sans pression (18) ou la sortie de pression (8), il est prévu des liaisons d'écoulement (23; 24) dont chacune peut être libérée et bloquée exclusivement alternativement, la liaison d'écoulement (23) reliant l'espace annulaire (15a) à la chambre annulaire (16a) tant que le piston de fermeture (13) se trouve dans sa position d'arrêt, tandis que la liaison d'écoulement (24) relie la chambre annulaire (16a) à la chambre (18) ou à la sortie de pression (8) tant que le piston de fermeture (13) se trouve dans sa position de passage direct.

2. Vanne-pilote à deux positions selon la revendication 1, caractérisée en ce que la liaison d'écoulement (23) entre l'espace annulaire (15a) et la chambre annulaire (16a) est constituée par des évidements (23) en forme de poches ménagés dans l'élément de piston (13a) lesquels peuvent être recouverts par la paroi de la section d'alésage en gradins plus petite (15), et que la liaison d'écoulement (24) entre la chambre annulaire (16a) et la chambre(18) présente dans la tige de piston (14) un passage longitudinal raccordé en permanence à la chambre annulaire (16a) par l'intermédiaire de l'élément de piston (13a), ledit passage longitudinal comportant sur le piston de fermeture (13) une sortie (26) vers la chambre (18) ou vers la sortie de pression (8).

3. Vanne-pilote à deux positions selon l'une des revendications 1 et 2, caractérisée en ce que la liaison d'écoulement (23) peut êter bloquée entre l'espace annulaire (15a) et la chambre annulaire (16a) avant que la liaison d'écoulement (24) entre la chambre annulaire (16a) et la chambre (18) puisse être libérée.

4. Vanne-pilote à deux positions selon au moins l'une des revendications 1 à 3, caractérisée en ce qu'elle est utilisée dans un dispositif hydraulique de protection contre les surcharges d'un système hydraulique de grue dans lequel un dispositif de ralenti (42) peut être actionné dès l'atteinte de la pression maximale dans le système, la pression du système commandant le piston pilote et des conduites de pilotage (28, 29) menant au dispositif de ralenti (42) étant raccordées à la prise de pression (3) et à la sortie de pression (8), et une vanne de détente (32), de préférence réglable, étant intercalée dans les conduites de pilotage (28, 29), dans le sens d'écoulement en amont de la vanne-pilote (21).

FIG.1

FIG. 2